Europäisches Patentamt

European Patent Office

Office européen des brevets

(11) Veröffentlichungsnummer: **0 447 952 A2**

# EUROPÄISCHE PATENTANMELDUNG

(21) Anmeldenummer: 91103894.1

(22) Anmeldetag: 14.03.91

(51) Int. Cl.5: **B32B 27/18, C08K 3/18**

(30) Priorität: 20.03.90 DE 9003234 U

(43) Veröffentlichungstag der Anmeldung:
25.09.91 Patentblatt 91/39

(84) Benannte Vertragsstaaten:
**AT BE CH DE DK ES FR GB IT LI NL SE**

(71) Anmelder: **Röhm GmbH**
**Kirschenallee Postfach 4242**
**W-6100 Darmstadt 1(DE)**

Anmelder: **BASF Aktiengesellschaft**
**Carl-Bosch-Strasse 38**
**W-6700 Ludwigshafen(DE)**

(72) Erfinder: **Diroll, Otto**
**Kiesstrasse 46**
**W-6100 Darmstadt(DE)**
Erfinder: **Hofmann, Klaus**
**Hahlgartenstrasse 69**
**W-6103 Griesheim(DE)**
Erfinder: **Jacobsen, Uwe**
**Spessartring 18**

**W-6100 Darmstadt(DE)**
Erfinder: **Lorenz, Hans**
**Brentanostrasse 16**
**W-6100 Darmstadt(DE)**
Erfinder: **Schreyer, Günther, Dr.**
**Pfannmüllerweg 24**
**W-6100 Darmstadt(DE)**
Erfinder: **Szigeti, Peter Rudolf, Dr.**
**Waldstrasse 20**
**W-6087 Büttelborn(DE)**
Erfinder: **Buchert, Hermann, Dr.**
**An der Nolzeruhe 8c**
**W-6702 Bad Dürkheim 1(DE)**
Erfinder: **Eberle, Wolfgang, Dr.**
**Am Hemel 20**
**W-6500 Mainz(DE)**
Erfinder: **Heinz, Gerhard, Dr.**
**Im Vogelsang 2**
**W-6719 Weissenheim/Berg(DE)**
Erfinder: **Koch, Eckhard, Dr.**
**Merowinger Strasse 8**
**W-6701 Fussgönheim(DE)**

(54) **Kunststoffplatte mit Flammschutzausrüstung.**

(57) Die Erfindung betrifft eine thermoplastisch verformbare Kunststoffplatte mit Flammschutzausrüstung, insbesondere zum Innenausbau von Passagier-Fahrzeugen, gekennzeichnet durch eine Kernschicht von 1 bis 10 mm Dicke aus Polyethersulfon oder einem ähnlichen thermoplastischem Kunststoff mit einem Gehalt von wenigstens 0,5 Gew.-%, vorzugsweise wenigstens 2 Gew.-% flammschützenden Additiven, wie Bortrioxid, und durch beiderseits mit der Kernschicht haftend verbundene, wenigstens 0,05 mm dicke Deckschichten aus thermoplastischem Kunststoff mit einem geringeren oder völlig fehlenden Gehalt an flammschützenden Additiven.

EP 0 447 952 A2

Die Erfindung betrifft eine thermoplastisch verformbare Kunststoffplatte mit Flammschutzausrüstung, insbesondere zum Innenausbau von Passagier-Fahrzeugen, -Schiffen und -Flugzeugen bzw. zur Herstellung von dafür geeigneten Bauelementen.

Die Erfahrung hat erwiesen, daß die Evakuierung von Massenverkehrsmitteln im Brandfalle so lange dauert, daß Gefahr für Gesundheit und Leben der Passagiere besteht. Deshalb werden für den Innenausbau solcher Verkehrsmittel Werkstoffe verwendet, von denen im Brandfall keine zusätzliche Gefährdung der Passagiere ausgeht. Sie sollen unter Brandbedingungen möglichst spät und möglichst wenig Wärme, Rauch und giftige Gase freisetzen.

In der Vergangenheit wurde für den Innenausbau von Flugzeugen vielfach thermoplastische Kunststoffe wie ABS, PC oder PES eingesetzt. Diese Werkstoffe setzen aber schon unmittelbar nach der Entzündung viel Wärme frei. ABS entwickelt außerdem starken Rauch. Daher werden diese Kunststoffe für den Innenausbau von Flugzeugen inzwischen nicht mehr zugelassen.

Die FAA (Federal Aviation Authority - USA) hat gemeinsam mit den Flugzeugherstellern Meßmethoden und Eigenschaftsgrenzwerte für die Prüfung der Eignung von Werkstoffen für den Innenausbau von Flugzeugen festgelegt, z.B.:

| Eigenschaft | Meßwert | Dimension | Maximalwert |
|---|---|---|---|
| Wärmeentwicklung | HHR | $kW/m^2$ | 65 |
| FAR 25.853 (OSU) | HR | $kW\ min/m^2$ | 65 |
| Rauchgasdichte | $D_S$ (4 min) | | 100 |
| Toxische Gase | CO | ppm | 3.500 |
| | $SO_2, H_2S$ | ppm | 100 |

Stand der Technik

Thermoplastische Kunststoffe, die gemäß DE-A 38 29 712 mit flammschützenden Additiven modifiziert sind, erfüllen diese Brandanforderungen. Die Additive verbessern das Brennverhalten im OSU-Kammertest. Im Vergleich zu ABS, PC und PES verbessern die damit ausgerüsteten Kunststoffe bei der Verwendung zum Innenausbau von Verkehrsmitteln die Sicherheit der Passagiere im Brandfalle wesentlich und werden aus diesem Grund in großem Umfang in der Flugzeugindustrie eingesetzt.

Trotzdem haben sie noch gewisse Nachteile. Die Schlagzähigkeit (nach Gardner) der aus den modifizierten Kunststoffen hergestellten Platten liegt um so niedriger je höher der Gehalt an flammhemmenden Zusätzen ist. Die beim OSU-Brandtest ermittelten HRR-Werte liegen - vor allem bei den für den Innenausbau besonders wichtigen 2 bis 5 mm dicken Platten - noch ziemlich nahe an den zulässigen Höchstwerten. Einige der verwendeten Additive, vor allem Bortrioxid, bilden außerdem störende Beläge oder Ausblühungen auf der Oberfläche der Platten.

Aufgabe und Lösung

Gefordert wird ein Kunststoffmaterial, dessen Brandverhalten dem OSU-Test genügt, das aber gleichzeitig eine hohe Schlagzähigkeit aufweist. Eine weitere Verminderung der Wärmeentwicklung beim OSU-Test wird angestrebt. Die mechanischen Eigenschaften sollen ausreichen, um durch Verwendung dünnerer Platten eine weitere Gewichtseinsparung zu gestatten. Schließlich sollen die störenden Beläge vermieden werden.

Die Aufgabe wird erfindungsgemäß gelöst durch eine mehrschichtige Kunststoff-Platte, enthaltend eine Kernschicht von 1 bis 10 mm Dicke aus thermoplastischem Kunststoff mit einem Gehalt von wenigstens 0,5 Gew.-%, vorzugsweise wenigstens 2 Gew.-% flammschützenden Additiven und beiderseits mit der Kernschicht haftend verbundene, wenigstens 0,05 mm dicke Deckschichten aus thermoplastischem Kunststoff mit einem geringeren Gehalt an flammschützenden Additiven als in der Kernschicht. Vorzugsweise sind die Deckschichten völlig frei von flammschützenden Additiven.

Die Wirkung der Deckschichten ist überraschend. Während nämlich befürchtet werden mußte, daß die OSU-Testergebnisse der neuen Platte dem reinen Kunststoffmaterial, das die Oberfläche bildet, entsprechen würden, zeigte es sich überraschenderweise an Platten aus einer Kernschicht aus einem mit flammschützenden Additiven ausgerüsteten Kunststoff und Deckschichten aus dem reinem Kunststoff, daß die OSU-Testwerte deutlich niedriger als bei homogenen Platten aus dem reinen Kunststoff und sogar niedriger als bei homogenen Platten aus dem Additive enthaltenden Kunststoff liegen. Es tritt ein geregelter Abbrand unter Carbonisierung der Oberfläche ein, was zu vermindertem Fließen und verminderter Blasenbildung bei der Brandbelastung führt. Überraschend ist vor allem die Tatsache, daß sich eine Verminderung der Schlagzähigkeit (nach Gardner) durch den Gehalt an flammschützenden Additiven an den neuen Mehrschichtplatten nicht feststellen ließ.

Die vorteilhaften Eigenschaften gehen aus den nachfolgend beschriebenen Vergleichsversuchen hervor, bei denen als thermoplastischer Kunststoff Polyethersulfon (PES) und als flammhemmendes Additiv Bortrioxid verwendet worden ist.

Dem Vergleich werden folgende Werkstoffe zugrundegelegt:

A: Einschichtig extrudierte Platte aus reinem PES
B: Einschichtig extrudierte Platte aus PES mit 3 Gew.-% $B_2O_3$ + 8 Gew.-% $TiO_2$ (gemäß DE-A 38 29 712)
C: Dreischichtig koextrudierte Platte mit einer Kernschicht eines Kunststoffes gemäß B und beiderseits daran haftenden Deckschichten aus reinem PES

## 1. Heat Release Rate gemäß FAR 25.853 (HRR nach OSU-Test)

| Muster | Heat Release Rate ($kW/m^2$) Plattendicke (mm) | | | |
|---|---|---|---|---|
| | 1,5 | 2,0 | 2,5 | 3,0 |
| A | 56 | 65 | 78 | 88 |
| B | 37 | 48 | 53 | 56 |
| C | 41 | 47 | 50 | 51 |

## 2. Gardner-Schlagzähigkeit

| | 1,5 | 2,0 | 2,5 | 3,0 |
|---|---|---|---|---|
| A | >18 | >18 | >18 | >18 |
| B | 8 | 10 | 14 | 16 |
| C | >18 | >18 | >18 | >18 |

Durch die Deckschichten mit dem angegebenen niedrigen oder vorzugsweise gänzlich fehlenden Gehalt an Additiven, wie Bortrioxid, werden Ausblühungen wirksam verhindert.

**Ausführung der Erfindung**

Die flammgeschützten Platten gemäß der Erfindung werden zweckmäßig durch die an sich bekannte Technik der wenigstens dreischichtigen Koextrusion erzeugt. Die Kernschicht kann gegebenenfalls ihrerseits aus mehreren Schichten zusammengesetzt sein.

Vorzugsweise sind die Platten 0,5 bis 20 mm, insbesondere 0,8 bis 5 mm dick. Platten im Bereich von 1 - 3 mm sind von besonderem praktischem Interesse für den Flugzeugbau.

3

Die Deckschichten können 0,05 - 2 mm, vorzugsweise 0,1 - 1,0 mm dick sein. Sind die Deckschichten weniger als 0,1 mm dick, so erweisen sie sich allerdings in manchen Fällen als wenig wirksam; das Brandverhalten entspricht in diesen Fällen dem der reinen Kernschicht. Bei einer Dicke der Deckschicht von wenigstens 0,1 mm, insbesondere von wenigstens 0,15 mm ist stets eine Verminderung der OSU-Testwerte festzustellen. Mit zunehmender Dicke, beispielsweise bis zu 0,25 mm, findet man weiterhin sinkende OSU-Testwerte.

Der thermoplastische Kunststoff, aus dem die Kern- und Deckschichten aufgebaut sind, soll extrudierbar sein und eine thermoplastische bzw. thermoelastische Umformung der daraus extrudierten Platten zulassen. Er soll eine hohe Temperaturbeständigkeit haben. Vorteilhaft ist eine Vicat-Erweichungs Temperatur im Bereich von 150 bis 250°C. Seine Dauergebrauchs-Temperatur (nach UL 746 B) soll oberhalb 130°C, vorzugsweise oberhalb 150°C liegen. Weiterhin soll er im Brandfalle eine niedrige Rauchgasdicht entwickeln und möglichst wenig oder gar keine giftigen Verbrennungsgase bilden. Diese Forderungen werden von einer Reihe von thermoplastischen Konstruktions-Kunststoffen (engineering plastics) erfüllt, deren gemeinsames Merkmal aromatische Gruppen, insbesondere Phenylengruppen, in der Hauptkette sind. Bekannte Vertreter dieser thermoplastischen Kunststoffe sind

Polyethersulfon (PES),

Polyetherimid (PEI),

Polyaryletheretherketon (PEEK),

Polyphenylensulfid (PPS),

thermoplastische Polyimide (PI),

Polyamidimide (PAI),

selbstverstärkende Flüssigkristallpolymere (LCP)

Kurze Beschreibungen dieser Kunststoffe und ihrer Herstellbarkeit finden sich im "Kunststoff-Kompendium" von A. Franck und K. Biederbick (Vogel Buchverlag Würzburg, 2.Aufl. 1988). Auf den beigefügten Formeltafeln sind typische Strukturen derartiger Kunststoffe angegeben.

Bevorzugt sind Polyethersulfone. Darunter versteht man eine zu den Polysulfonen gehörende Klasse von Polykondensat-Kunststoffen, die aus bifunktionellen aromatischen Resten, insbesondere Phenylengruppen, welche über Ether- und Sulfonbrücken verbunden sind, aufgebaut sind. Sie werden nachfolgend (nach DIN 7728 T) mit PES bezeichnet. PES sind thermoplastisch, thermisch stabil und selbstverlöschend. Für die Zwecke der Erfindung werden PES mit einer zur Extrusion geeigneten Schmelzviskosität verwendet; der MFI-Wert (melt flow index) bei 360°C liegt z.B. bei etwa 30 $cm^3$/10 min.

Sie sind aus wiederkehrenden Einheiten der allgemeinen Strukturformel

$$- (Ar - SO_2 - Ar - O)_n -$$

aufgebaut, worin Ar einen bifunktionellen, ein- oder mehrkernigen aromatischen Rest bedeutet. Mit n ist der Polymerisationsgrad bezeichnet, der so gewählt wird, daß die erforderliche Schmelzviskosität erreicht wird. Vorzugsweise bestehen die Reste Ar aus p-Phenylengruppen, die gegebenenfalls Substituenten, wie niedere Alkylgruppen oder Cycloalkylgruppen, tragen können. Mehrkernige Reste Ar enthalten beispielsweise zwei derartige Phenylengruppen, die durch eine Einfachbindung oder durch ein Sauerstoff- oder Schwefelatom oder durch $SO_2$-, Methylen- oder Isopropyliden-Gruppen verknüpft sein können.

Grundsätzlich können die Kern- und Deckschichten aus unterschiedlichen Kunststoffen bestehen. Es ist jedoch vorteilhaft, wenn die Deckschichten - abgesehen von dem Gehalt an flammschützenden Additiven - den gleichen thermoplastischen Kunststoff wie die Kernschicht enthalten. In der Regel sind die Deckschichten frei von flammschützenden Additiven. Ein geringer, 0,5 Gew.-% nicht überschreitender Gehalt solcher Zusätze kann in den Deckschichten beispielsweise auftreten, wenn die Additive unter den Koextrusionsbedingungen teilweise aus der Kernschicht in die Deckschichten diffundieren oder wenn zur Bildung der Deckschichten in geringem Umfang wiederverwendetes Plattenmaterial eingesetzt wird.

Die günstigsten mechanischen Eigenschaften werden erreicht, wenn die Deckschichten völlig frei von flammschützenden Additiven sind. In dem Maße, wie eine Beeinträchtigung der mechanischen Eigenschaften hingenommen werden kann, können auch in die Deckschichten flammschützende Additive eingebracht werden. Vorzugsweise liegt dieser Gehalt deutlich unter 1 Gew.-%, insbesondere unter 0,5 Gew.-%.

Die Kernschicht enthält eine wirksame Menge an flammschützenden Additiven, die danach bemessen wird, daß die mehrschichtige Platte den OSU-Brandtest erfüllt. Die Zusatzmenge beträgt wenigstens 0,5 Gew.-%, vorzugsweise wenigstens 2 Gew.-% und besonders bevorzugt 2,5 bis 15 Gew.-%.

**Flammschützende Additive**

im Sinne der Erfindung sind alle Stoffe, die im Brandfalle die Wärmeentwicklung hemmen und bei der Verbrennung keine toxischen Gase oder Dämpfe entwickeln. Als Additive eignen sich besonders anorganische Stoffe, die beim Abkühlen aus der Schmelze in einen amorphen glasartigen Zustand übergehen und dabei eine ebene oder räumliche Netzwerkstruktur ausbilden. Es wird vermutet, daß diese den geschmolzenen Kunststoff benetzen und mit einer Schmelzeschicht überziehen können.

Die Additive sollen einen Schmelzpunkt zwischen 300 und 1400°C, vorzugsweise zwischen 350 und 1200°C, insbesondere zwischen 400 und 1000°C aufweisen oder bei Brandbedingungen in Stoffe mit einem solchen Schmelzpunkt übergehen. Zu den geeigneten Additiven gehören Oxide von Elementen der III. bis V. Hauptgruppe des periodischen Systems der Elemente, sowie Salze von Sauerstoffsäuren eines solchen Elements. Unter den Salzen sind Na-, K-, Ca-, Zn- und Al-Salze bevorzugt. Hydrate und Carbonate der erwähnten Elemente können im Brandfall gegebenenfalls in Oxide mit den angegebenen Eigenschaften übergehen. Auch Gemische verschiedener Additive sind verwendbar.

Beispiele geeigneter Additive sind $B_2O_3$, $NaBO_2$, $Na_2B_4O_7$, $Ca(BO_2)_2$, $Zn(BO_2)_2$, $Zn_2B_2O_{11}$, $P_2O_5$, $Na_4P_2O_7$, $NaPO_3$, $Ca(PO_3)_2$, $Zn_3(PO_4)_2$, $Sb_2O_3$, $Sb_2O_5$, $Na_3SbO_4$, $NaSiO_3$, $Na_2O$-$CaO$-$6SiO_2$, $K_2O$-$Al_2O_3$-$6SiO_2$ (Feldspat), $Na_2O$-$Al_2O_3$-$6SiO_2$ (Zeolith) und andere Silikate.

In den Deckschichten und der Kernschicht können weitere Additive enthalten sein, die die HRR-Werte weiter reduzieren, z.B. Magnesiumhydroxyd. Weiterhin wird das Brandverhalten durch einen Gehalt von Titandioxid in der Deck- und Kernschicht, beispielsweise in einer Menge von 5 bis 10 Gew.-%, günstig beeinflußt.

Ein bevorzugtes flammschützendes Additiv - insbesondere für den Zusatz zu PES - ist Bortrioxid. Wenn die Kernschicht höchstens 2 mm dick ist, genügt ein Gehalt von 2 Gew.-% Bortrioxid. Ist die Kernschicht mehr als 2 mm dick, so ist ein Gehalt von wenigstens 2,5 Gew.-%, bespielsweise 3 Gew.-% an Bortrioxid vorteilhaft. Vorzugsweise enthält die Kernschicht zusätzlich Titandioxid. Die Deckschichten können 1 bis 12 Gew.-% eines Weißpigments enthalten.

Die neuen Platten können zweckmäßig durch Coextrusion der drei Schichten hergestellt werden. Die Oberfläche der extrudierten Bahn kann in einem Walzenglättwerk geglättet oder strukturiert werden. Zur Herstellung geformter Teile werden die extrudierten ebenen Platten bis zum Erweichen erhitzt und mittels Vakuum und/oder Ziehstempeln an einem Formwerkzeug umgeformt.

## BEISPIELE

Beispiel 1

In zwei getrennten Extrudern werden PES (Handelsprodukt ULTRASON®E 3000 Q 12 der BASF AG) mit einem Gehalt an 3 Gew.-% $B_2O_3$ und 8 Gew.-% $TiO_2$ sowie Farbpigmenten für die Kernschicht einerseits und reines, lediglich etwas pigmentiertes PES für die Deckschichten andererseits geschmolzen, auf 350°C erhitzt und mittels eines Coextrusionsadapters zu einem dreischichtigen Strang zusammengeführt. Dieser wird aus einer verstellbaren Breitschlitzdüse zu 1,5 bis 3 mm dicken Bahnen extrudiert, die von einem Walzenglättwerk übernommen, geglättet oder ein- oder beidseitig geprägt und unter 226°C abgekühlt werden. Die Bahnen enthalten zwei je 0,2 mm dicke Deckschichten und dazwischen eine 1,1 bis 2,6 mm dicke Kernschicht. Die Bahnen werden mittels einer Trennvorrichtung zu Platten handelsüblicher Größe zerlegt.

Das Brandverhalten im OSU-Test im Vergleich zu einschichtigen Platten aus reinem PES und solchen aus der oben angegebenen Mischung ist in den Tabellen in der Beschreibung angegeben.

Beispiel 2

Entsprechend der im Beispiel 1 beschriebenen Arbeitsweise werden durch Koextrusion 3 mm dicke Platten mit einer Kernschicht aus PES mit einem Gehalt von 3 Gew.-% Bortrioxid und 8 Gew.-% Titandioxid mit und ohne coextrudierte Deckschichten aus reinem PES hergestellt. Beim OSU-Test wurden folgende Testwerte gefunden, die jeweils den Mittelwert von 5 Einzelmessungen darstellen:

| Dicke der Deckschichten mm | OSU-Testergebnis | |
|---|---|---|
| | HHR kW/qm | HR kW.min/qm |
| 0,0 | 60-65 | <10 |
| 0,06-0,08 | 71 | 4 |
| 0,10-0,12 | 37 | 3 |
| 0,15-0,17 | 47 | 7 |
| 0,20-0,22 | 49 | 9 |

Verwendet man für die Deckschichten PES, das zusätzlich 8 Gew.-% Titandioxid enthält, so ergeben sich folgende OSU-Testergenbisse:

| Dicke der Deckschichten mm | OSU-Testergebnis | |
|---|---|---|
| | HHR kW/qm | HR kW.min/qm |
| 0,0 | 60-65 | <10 |
| 0,06-0,08 | 66 | 3 |
| 0,10-0,12 | 59 | 4 |
| 0,15-0,17 | 48 | 5 |
| 0,20-0,22 | 45 | 10 |

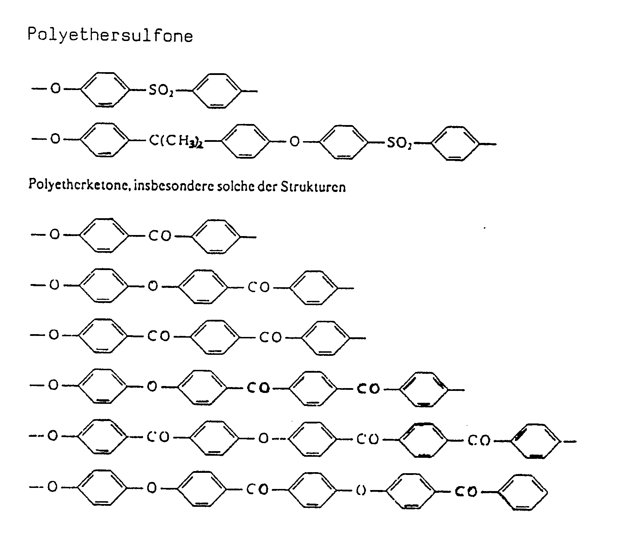

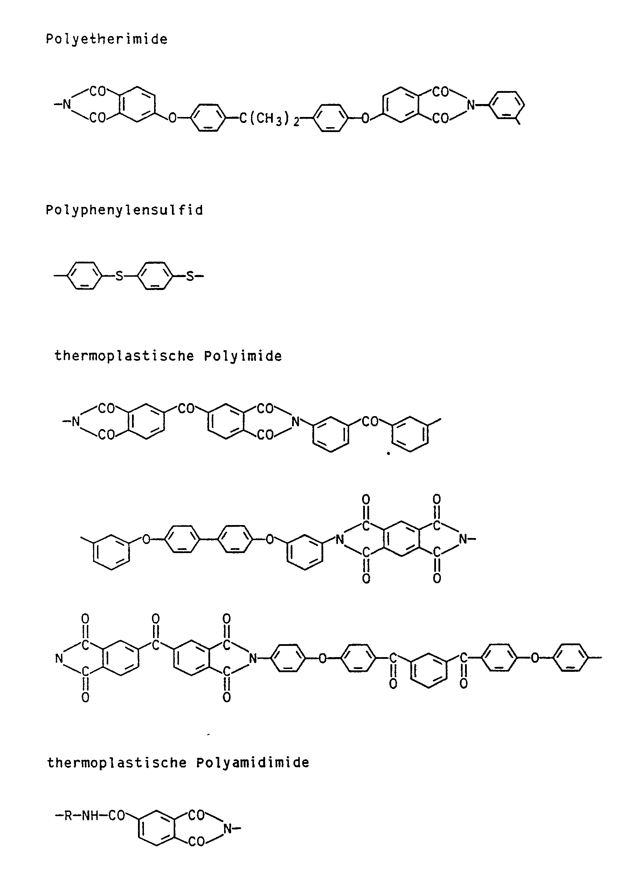

**Patentansprüche**

1. Flammgeschützte umformbare Kunststoff-Platte, gekennzeichnet durch eine Kernschicht von 1 bis 10 mm Dicke aus thermoplastischem Kunststoff mit einem Gehalt von wenigstens 0,5 Gew.-%, vorzugsweise wenigstens 2 Gew.-% flammschützenden Additiven und durch beiderseits mit der Kernschicht haftend verbundene, wenigstens 0,05 mm dicke Deckschichten aus thermoplastischem Kunststoff mit einem geringeren Gehalt an flammschützenden Additiven als in der Kernschicht.

2. Flammgeschützte Kunststoff-Platte nach Anspruch 1, dadurch gekennzeichnet, daß die Deckschichten frei von flammschützenden Additiven sind.

3. Flammgeschützte Kunststoff-Platte nach Anspruch 1 oder 2, dadurch gekennzeichnet, daß die Kernschicht und die Deckschicht aus thermoplastischem Kunststoff aus der Gruppe
Polyethersulfon (PES),
Polyetherimid (PEI),
Polyaryletheretherketon (PEEK),
Polyphenylensulfid (PPS),
thermoplastische Polyimide (PI),
Polyamidimide (PAI),
selbstverstärkende Flüssigkristallpolymere (LCP)
bestehen.

4. Flammgeschützte Kunststoff-Platte nach einem oder mehreren der Ansprüche 1 bis 3, dadurch gekennzeichnet, daß die Deckschichten - abgesehen von dem Gehalt an flammschützenden Additiven - den gleichen thermoplastischen Kunststoff wie die Kernschicht enthalten.

5. Flammgeschützte Kunststoff-Platte nach einem oder mehreren der Ansprüche 1 bis 4, dadurch gekennzeichnet, daß der thermoplastischen Kunststoff Polyethersulfon (PES) ist.

6. Flammgeschützte Kunststoff-Platte nach Anspruch 5, dadurch gekennzeichnet, daß das flammschützende Additiv einen Schmelzpunkt zwischen 300 und 1400°C, vorzugsweise zwischen 350 und 1200°C, insbesondere zwischen 400 und 1000°C aufweist oder bei Brandbedingungen in einen Stoff mit einem solchen Schmelzpunkt übergeht.

7. Flammgeschützte Kunststoff-Platte nach Anspruch 6, dadurch gekennzeichnet, daß das Additiv ein Oxid eines Elementen der III. bis V. Hauptgruppe des periodischen Systems der Elemente oder ein Salz einer Sauerstoffsäure eines solchen Elements ist.

8. Flammgeschützte Kunststoff-Platte nach Anspruch 7, dadurch gekennzeichnet, daß das Additiv eine Verbindung aus der Gruppe $B_2O_3$, $NaBO_2$, $Na_2B_4O_7$, $Ca(BO_2)_2$, $Zn(BO_2)_2$, $Zn_2B_2O_{11}$, $P_2O_5$, $Na_4P_2O_7$, $NaPO_3$, $Ca(PO_3)_2$, $Zn_3(PO_4)_2$, $Sb_2O_5$, $Sb_2O_3$, $Na_3SbO_4$, $Na_2SiO_3$, $Na_2O\text{-}CaO\text{-}6SiO_2$, $K_2O\text{-}Al_2O_3\text{-}6SiO_2$ (Feldspat),$Na_2O\text{-}Al_2O_3\text{-}6SiO_2$ (Zeolith) ist.

9. Flammgeschützte Kunststoff-Platte nach Anspruch 8, dadurch gekennzeichnet, daß das Additiv Bortrioxid ist.

10. Flammgeschützte Kunststoff-Platte nach Anspruch 9, dadurch gekennzeichnet, daß die Kernschicht höchstens 2 mm dick ist und nicht mehr als 2 Gew.-% Bortrioxid enthält.

11. Flammgeschützte Kunststoff-Platte nach Anspruch 9, dadurch gekennzeichnet, daß die Kernschicht mehr als 2 mm dick ist und wenigstens 2,5 Gew.-% Bortrioxid enthält.

12. Flammgeschützte Kunststoff-Platte nach einem oder mehreren der Ansprüche 5 und 9 bis 11, dadurch gekennzeichnet, daß die Kernschicht zusätzlich Titandioxid enthält.

13. Flammgeschützte Kunststoff-Platte nach einem oder mehreren der Ansprüche 1 bis 12, dadurch gekennzeichnet, daß die Deckschichten 1 bis 12 Gew.-% eines Weißpigments enthalten.

14. Flammgeschützte Polyethersulfon-Platte nach Anspruch 13, dadurch gekennzeichnet, daß die Deckschichten als Weißpigment Titandioxid enthalten.

15. Flammgeschützte Kunststoff-Platte nach einem oder mehreren der Ansprüche 1 bis 14, dadurch gekennzeichnet, daß sie beim OSU-Test einen HHR-Wert nicht über 65 kW/m$^2$ und einen HR-Wert nicht über 65 kW min/m$^2$ ergibt.

16. Flammgeschützte Kunststoff-Platte nach einem oder mehreren der Ansprüche 1 bis 15 gekennzeichnet durch eine Schlagzähigkeit nach Gardner von mindestens 18.

Polyethersulfone

$$-O-\langle\text{Ph}\rangle-SO_2-\langle\text{Ph}\rangle-$$

$$-O-\langle\text{Ph}\rangle-C(CH_3)_2-\langle\text{Ph}\rangle-O-\langle\text{Ph}\rangle-SO_2-\langle\text{Ph}\rangle-$$

Polyetherketone, insbesondere solche der Strukturen

$$-O-\langle\text{Ph}\rangle-CO-\langle\text{Ph}\rangle-$$

$$-O-\langle\text{Ph}\rangle-O-\langle\text{Ph}\rangle-CO-\langle\text{Ph}\rangle-$$

$$-O-\langle\text{Ph}\rangle-CO-\langle\text{Ph}\rangle-CO-\langle\text{Ph}\rangle-$$

$$-O-\langle\text{Ph}\rangle-O-\langle\text{Ph}\rangle-CO-\langle\text{Ph}\rangle-CO-\langle\text{Ph}\rangle-$$

$$-O-\langle\text{Ph}\rangle-CO-\langle\text{Ph}\rangle-O-\langle\text{Ph}\rangle-CO-\langle\text{Ph}\rangle-CO-\langle\text{Ph}\rangle-$$

$$-O-\langle\text{Ph}\rangle-O-\langle\text{Ph}\rangle-CO-\langle\text{Ph}\rangle-()-\langle\text{Ph}\rangle-CO-\langle\text{Ph}\rangle$$

Polyetherimide

Polyphenylensulfid

thermoplastische Polyimide

thermoplastische Polyamidimide